# EUROPÄISCHE PATENTANMELDUNG

(11) **EP 3 219 916 A1**
(43) Veröffentlichungstag der Anmeldung: **20.09.2017**
(21) Anmeldenummer: 16160546.4
(22) Anmeldetag: 16.03.2016
(51) Int. Cl.: F01D 5/16, F04D 29/66

(54) **VERFAHREN ZUR HERSTELLUNG EINES IMPULS-VERSTIMMUNGSBAUTEILS FÜR EINE TURBINE**

(71) Anmelder: MTU Aero Engines AG, 80995 München (DE)
(72) Erfinder: Dr. Richter, Karl-Hermann, 85229 Markt Indersdorf (DE)

(57) **Zusammenfassung**

Die Erfindung betrifft ein Verfahren zur Herstellung eines Verstimmungsbauteils. Das Verfahren umfasst die Schritte: a.) Herstellung eines Behälters (34) mit mindestens einer Kammer (36); b.) Herstellung eines Deckels (32, 32'); c.) Einlegen mindestens eines Impulskörpers in die Kammer (36); d.) Fügen des Deckels (32, 32') mit dem Behälter (34), wobei das Fügen per Löten erfolgt.

## Beschreibung

Die Erfindung betrifft ein Verfahren zur Herstellung eines Impuls-Verstimmungsbauteils nach dem Oberbegriff des Anspruchs 1.

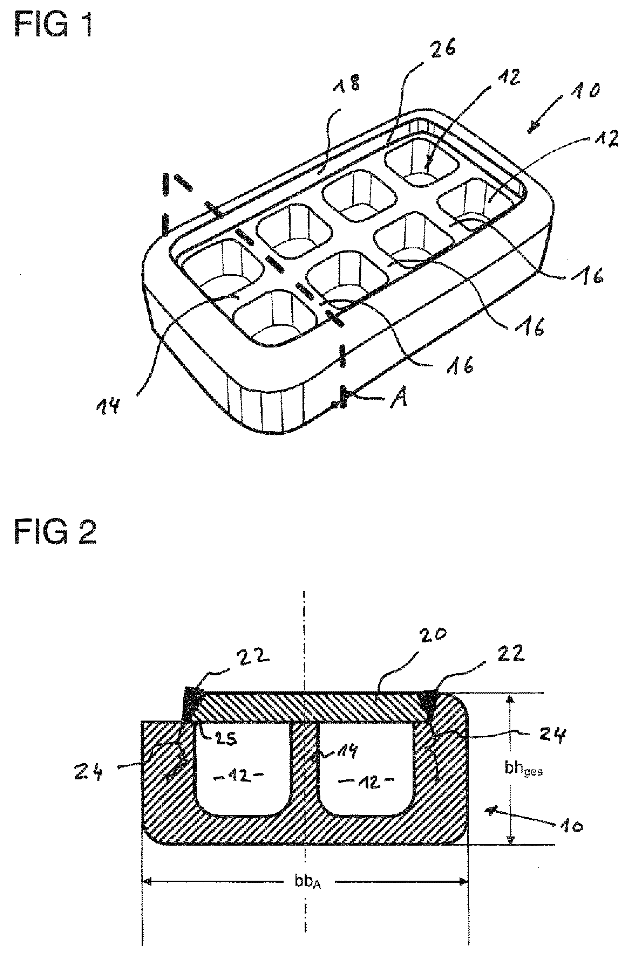

Ein solcher Impuls-Verstimmungsbauteil ist beispielsweise in der Anmeldung DE 10 2014 223231 wiedergegeben (zum Zeitpunkt der Einreichung der vorliegenden Anmeldung noch nicht veröffentlicht). Das Impulsverstimmungsbauteil ist hier in der Figur 1 perspektivisch ohne dazugehörigen Deckel abgebildet. Die Figur 2 zeigt auf der rechten Seite einen Schnitt durch die Ebene A. Die Figur 2 zeigt zwei unterschiedliche bekannte Ausführungsformen. Das Impulsverstimmungsbauteil weist einen hier im Wesentlichen quaderförmigen Behälter 10 auf. Im Behälter 10 sind acht voneinander getrennte Kammern 12 eingelassen, die durch eine Längstrennwand 14 und von drei Quertrennwänden 16 begrenzt werden. Ferner weist der Behälter einen um den Umfang des Behälters verlaufenden Kragen 18 auf (in der Figur 2 nur rechts abgebildet), der die Längstrennwand 14 und die Quertrennwände in Höhe überragt. Dieser Kragen 18 dient als Aufnahme für den entsprechend passend geformten Deckel 20. Dabei muss der Deckel 20 eine Genauigkeit von besser als 2/100 mm aufweisen. Nachdem die Kammern 12 mit einer Kugel befüllt wurde, wird der Deckel 20 in die zwischen dem Kragen 18 befindliche Aufnahme platziert. Anschließend wird der Deckel 20 mit dem Behälter 10 verschweißt. Eine keilförmige Schweißnaht 22 ist in der Figur 2 zu sehen. Allerdings können jedoch in Schweißnahtrichtung Kerben bzw. Risse 24 entstehen. Die Rißentstehung wird durch die Innenkante 26 verstärkt. Unter Betriebsbedingungen kann das Bauteil sogar komplett versagen.

In einer anderen Ausführungsform, die auf der linken Seite der Figur 2 abgebildet ist, weist der Behälter 10 keine Aufnahme für den Deckel 20 auf, so dass auch keine Innenkante 26 vorhanden ist. Das Schweißen des Deckels 20 mit dem Behälter 10 erfolgt dadurch, dass die Hitzequelle relativ vom Rand des Deckels in Richtung der Mitte des Deckels um 0,1 bis 0,2 mm versetzt wird. Dadurch wirkt der Deckel partiell als Zusatzwerkstoff. Allerdings können auch hier in Schweißnahtrichtung Kerben bzw. Risse 24 entstehen. Zwischen dem nicht verschweißten Bereich zwischen dem Deckel 20 und dem Behälter 10 entsteht eine Kerbe 25, die ein Abscheren des Deckels 20 zur Folge haben kann.

Somit liegt der vorliegenden Erfindung die Aufgabe zu Grunde ein Verfahren zur Herstellung eines Impuls-Verstimmungsbauteils vorzustellen, so dass im Verstimmungsbauteil unter Betriebsbedingungen kaum bis keine Risse entstehen.

Die Aufgabe wird durch die Merkmale des Anspruchs 1 gelöst.

Die Erfindung betrifft ein Verfahren zur Herstellung eines Impuls-Verstimmungsbauteils für eine Turbine. Das Verfahren umfasst im Wesentlichen die folgend aufgeführten Schritte. In Schritt a.) wird ein Behälter mit mindestens einer Kammer hergestellt. In Schritt b.) wird ein Deckel hergestellt. Anschließend wird in Schritt c.) ein Impulskörper in die Kammer hinein gelegt. In Schritt d.) wird dann der Deckel mit dem Behälter gefügt, wobei das Fügen per Löten erfolgt.

Dabei kann der Impulskörper eine einfache Kugel sein. Zylinderförmige Körper sind auch denkbar. Die Form hängt von der Form der Kammer bzw. Tasche ab, in die der Impulskörper später platziert wird. Wichtig ist nur, dass die Kammer größer ist als der Impulskörper, so dass dieser in der Kammer ausreichend Platz hat, um sich hin- und herbewegen zu können.

Dabei ist vorteilhaft, dass in der Fügezone keine Kerben auftreten. Damit wird die Lebensdauer des Verstimmungsbauteils deutlich erhöht. Es ist anzumerken, dass der Behälter mehr als eine voneinander getrennte Kammern aufweisen kann. Diese Kammern können dann eierschachltelförmig angeordnet sein.

In einer vorteilhaften Ausgestaltung der Erfindung wird für das Löten als Wärmequelle ein Ofen, eine induktive Spule, ein Laserstrahl und/oder ein Elektronenstrahl verwendet. Ferner kann die Wärmebehandlung im Vakuum und/oder in einer Schutzatmosphäre erfolgen. Das Vakuum kann einen Restdruck von 10⁻⁵mbar bis 10⁻³mbar aufweisen.

In einer weiteren vorteilhaften Ausgestaltung der Erfindung ist die Reihenfolge der Schritte a.) und b.) beliebig. Der Schritt c.) folgt dabei nach Schritt a.) und der Schritt d.) folgt dabei nach den Schritten b.) und c.).

In einer weiteren vorteilhaften Ausgestaltung der Erfindung erfolgt die Herstellung des Deckels in Schritt b.) durch Stanzen, durch Laserstrahlschweißen und/oder durch Funkenerodieren. Bei der Herstellung mittels Funkenerodieren (EDM = electrical discharge machining) entsteht auf der Oberfläche des Deckels eine Oxidschicht in Form eines Recast Layers. Eine solche Oxidschicht hat den Vorteil, dass sie benetzungshemmend wirkt. Damit kann gezielt verhindert werden, dass das Lot an unerwünschte Stellen gelangt. Die Stellen, an denen das Lot aufgetragen werden soll, müssen von der Oxidschicht befreit werden. Generell können Deckel durch Stanzen extrem kostengünstig hergestellt werden.

In einer weiteren vorteilhaften Ausgestaltung der Erfindung erfolgt die Herstellung des Behälters in Schritt a.) durch Funkenerodieren, elektrochemische Bearbeitung und/oder mechanisches Abtragen, insbesondere durch Fräsen und/oder Schleifen. Bei der Herstellung mittels Funkenerodieren (EDM = electrical discharge machining) entsteht auf allen Oberflächen des Behälters eine Oxidschicht in Form eines Recast Layers, so auch an den die Kammer umschließenden Wandungen. Damit wird in vorteilhafterweise verhindert, dass Lot in die Kammer eindringt und die Beweglichkeit des Impulskörper stört bzw. hindert. Die Stellen, an denen das Lot aufgetragen werden soll, müssen von der Oxidschicht befreit werden. Vorzugsweise wird für den Behalter eine Nickellegierung, wie z.B. Haynes 230 verwendet.

In einer weiteren vorteilhaften Ausgestaltung der Erfindung wird nach Schritt a.) und vor Schritt c.) die Innenwandung der Kammer mit Al₂O₃ bestrahlt. Insbesondere wenn der Behälter mittels mechanischem Abtragen oder elektrochemischer Bearbeitung (ECM = electrochemical machining) hergestellt wurde. Dabei kann der Rand des Behälters entweder abgedeckt werden oder die Oberfläche des bestrahlten Rands wird abgetragen.

In einer weiteren vorteilhaften Ausgestaltung der Erfindung wird vor Schritt d.) mindestens ein umlaufender Teil des Behälters von Oxid befreit, auf dem vor Schritt d.) das Lot aufgetragen wird. Dies hat den Vorteil, dass eine hochwertige Lötverbindung entstehen kann.

In einer weiteren vorteilhaften Ausgestaltung der Erfindung beträgt in Schritt d.) die Lötzeit von 1s bis 60s.

In einer weiteren vorteilhaften Ausgestaltung der Erfindung wird vor Schritt d.) auf den Behälter und/oder auf dem Deckel ein Lotformteil platziert. Das Lotformteil kann beispielsweise durch Laserstrahlschneiden entsprechend der Kontur des Behälters ausgeschnitten werden. Als Lotmaterial eignet sich ein Nickelbasislot, wie AMS4777. Die Dicke des Lotformteils kann 25µm bis 50µm betragen.

In einer weiteren vorteilhaften Ausgestaltung der Erfindung wird vor Schritt d.) das Lotformteil beidseitig auf den Deckel und auf den Behälter geklebt. Dadurch werden die beiden Teile zueinander fixiert. Ein entsprechender Kleber kann in Schritt d.) rückstandsfrei verdampfen. Dies hat den Vorteil, dass die Handhabung deutlich vereinfacht wird. Alternativ dazu kann das komplettierte Bauteil (Behälter, Deckel und Lotformteil) mittels Heftschweißen fixiert werden. Dabei kann ein Heftpunkt pro Seite vorgesehen werden.

In einer weiteren vorteilhaften Ausgestaltung der Erfindung erfüllen die Außenbreite bb._{A}. des Behälters und die Außenbreite fb._{A}. des Lotformteils die Bedingung bb._{A}. ≥fb._{A}.. Ferner erfüllen die Innenbreite bb._{I}. des Behälters und die Innenbreite fb._{I}. des Lotformteils die Bedingung bb._{I}. ≤fb._{I}., wobei fb._{A}. > fb._{I}. gilt. Ferner können die Außenlänge bL._{A}. des Behälters und die Außenlänge fL._{A}. des Lotformteils die Bedingung bL._{A}. ≥fL._{A}. erfüllen und die Innenlänge bL._{I}. des Behälters und die Innenlänge fL._{I}. des Lotformteils können die Bedingung bL._{I}.≤fL._{I}. erfüllen, wobei fL._{A}. > fL._{I}. gilt. In einer besonderen Ausführungsform geht das Lotformteil bis zum Rand des Behälters. Dafür gilt dann:
bb._{A}.= fb._{A}. und bL._{A}. = fL._{A}.. Dies hat den Vorteil, dass eine Umlaufende Lötung entstehen kann, so dass die Kammer gasdichtig von der Außenumgebung abschlossen ist. Damit der Deckel bündig mit dem Behälter abschließt, müssen die Abmessungen des Deckels lediglich die folgenden Bedingungen erfüllen: db._{A}.≥bb._{A}. und dL._{A}.≥bL._{A}., wobei db._{A}. für die Deckelbreite und dL._{A}.für die Deckellänge stehen. Weist der Deckel die gleiche Aussenabmessungen auf wie der Behälter, so sollte der Deckel in Schritt d.) bündig zum Behälter ausgerichtet sein. Allerdings kann sich der Deckel beim Verlöten etwas verschieben. Dies kann durch geeignete Fixierung vermieden werden.

Alternativ dazu kann der Deckel in allen Richtungen größer sein als der Behälter. Dazu sollte nach Schritt d.) der über den Rand des Behälters ragende Teil des Deckels mechanisch abgetragen werden bis der Deckel bündig mit dem Rand ist.

Weitere vorteilhafte Ausgestaltungen der Erfindung sind in den Unteransprüchen wiedergegeben.

Im Weiteren werden anhand der schematischen Zeichnung bevorzugte Ausführungsbeispiele der Erfindung näher beschrieben. Dabei zeigen:
- - Figur 1:: eine perspektivische Ansicht eines bekannten Verstimmungsbauteils,
- - Figur 2:: einen Querschnitt entlang der Ebene A aus Figur 1,
- - Figur 3:: einen Querschnitt durch eine erste Ausführungsform eines erfindungsgemäß hergestellten Verstimmungsbauteils,
- - Figur 4:: einen Querschnitt durch eine zweite Ausführungsform eines erfindungsgemäß hergestellten Verstimmungsbauteils,
- - Figur 5:: eine Draufsicht auf den Behälter des Verstimmungsbauteils aus den Figuren 3 und 4, und
- - Figur 6:: eine Draufsicht auf einen bei der Herstellung verwendeten Lotformteils.

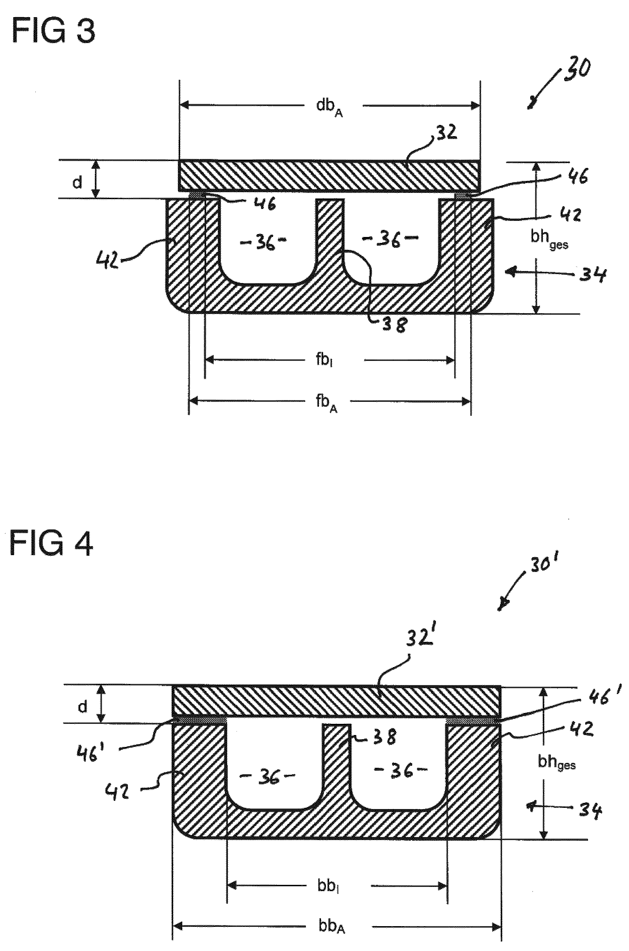

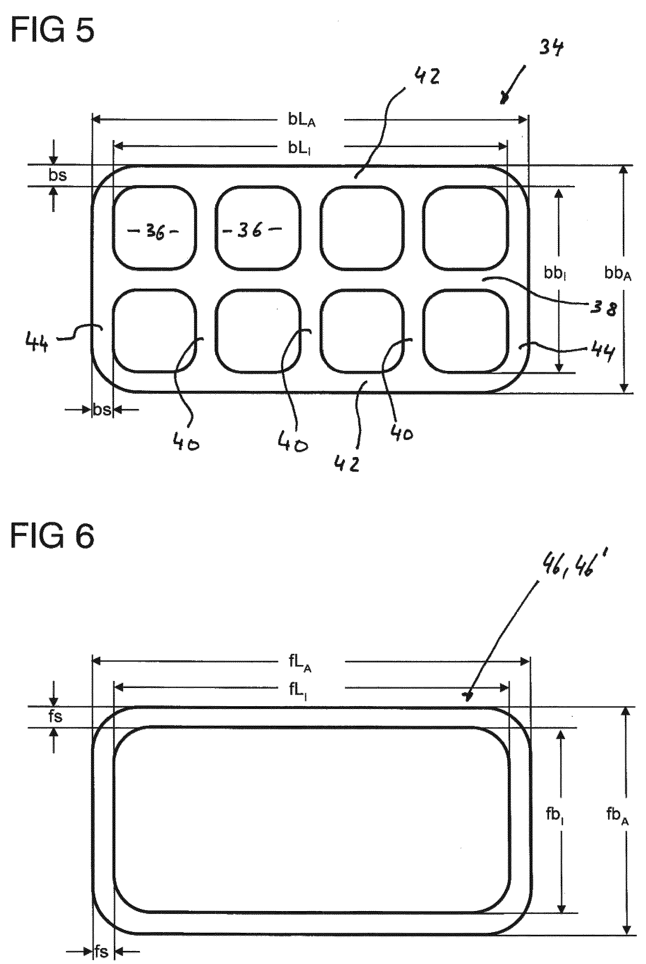

In den Figuren 3 und 4 ist ein Querschnitt durch ein Verstimmungsbauteil 30, 30' mit einem Deckel 32, 32' und einem quaderförmigen Behälter 34 abgebildet. Der in beiden Figuren 3 und 4 verwendete Behälter 34 ist in der Figur 5 in einer Draufsicht zu sehen. Der quaderförmige Behälter 34 mit rechteckiger Grundfläche weist hier acht gleich große Kammern 36 auf. Diese Kammern 36 werden innen durch eine längsverlaufende Trennwand 38 und durch drei querverlaufende Trennwände 40 voneinander getrennt. Diese, hier identischen, Kammern 36 werden außen durch zwei im Wesentlichen parallel zueinander verlaufende Längsaußenwände 42 mit einer Außenlänge bL._{A}. und durch zwei im Wesentlichen parallel zueinander verlaufende Queraußenwände 44 mit einer Außenbreite bb._{A}. eingerahmt. Die Trennwände 38 und 40 sind hier gleich hoch wie die Außenwände 42 und 44 (siehe Höhe h in Figur 3), so dass kein Kragen vorhanden ist, wie in den Figuren 3 und 4 entnommen werden kann. Die Breiten bs der Außenwände 42 und 44 sind vorzugsweise gleich groß. Ein wichtiges Maß ist die Innenlänge bL._{I}., die von der hier ganz linken Kammer bis zur ganz rechten Kammer reicht. Ein weiteres wichtige Maß ist die Innenbreite bb._{I}., die von der oberen Kammer bis zur unteren Kammer reicht. Diese Abmessungen sind sowohl für die Abmessungen des in der Figur 6 abgebildeten Lotformteils als auch für die Abmessungen des Deckels 34 wichtig.

In Figur 6 ist eine Draufsicht auf das zu verwendende Lotformteil 46. Das Lotformteil 46 ist hier ein im Wesentlichen rechteckigförmiger Rahmen mit einer Außenlänge fL._{A}., einer Innenlänge fL._{I}., einer Außenbreite fb._{A}.und einer Innenbreite fb._{I}.

In der ersten Ausführungsform (siehe Figur 3) ist die Breite db._{A}.des Deckels als auch die nicht abgebildete Länge dL._{A}. des Deckels kleiner als die Abmessungen des Behälters, d.h. es gilt Folgendes: bb._{A}. > db._{A}. und bL._{A}. > dL._{A}.. Dennoch liegt ein Teil des Deckels 32 auf den Außenwänden 42 und 44 auf, um ein gasdichtes Fügen zu ermöglichen. Das rahmenförmige Lotformteil 46 ist derart bemessen, dass es hier im Wesentlichen recht mittig auf der Oberfläche der Außenwände 42 und 44 aufliegt. Dabei gilt in Figur 3: fb._{I}. > bb._{I}. und fb._{A}. < bb._{A}.und fL._{I}. > bL._{I}. und fL._{A}. < bL._{A}.. Dies hat den Vorteil, dass das Lot etwas von den Kammern 36 beabstandet ist, so dass die Gefahr gering ist, dass Lot in die Kammern fließen kann.

In der Figur 4 ist eine zweite Ausführungsform eines erfindungsgemäß hergestellten Verstimmungsbauteil 30'. Im Unterschied zur ersten Ausführungsform ist, dass der Deckel 32' nun die gleichen Abmessungen aufweist wie der Behälter 34, d.h. es gilt Folgendes: bb._{A}. = db._{A}. und bL._{A}. = dL._{A}.. Dabei müssen diese Bedingungen nicht vor dem Schritt d.) erfüllt sein, wie bereits oben erklärt. Das rahmenförmige Lotformteil 46' ist derart bemessen, dass es innen im Wesentlichen bündig zu den Kammern 36 verläuft und außen im Wesentlichen bündig zu den Außenwänden 42 und 44 verläuft. Dabei gilt in Figur 4: fb._{I}.= bb._{I}. und fb._{A}. = bb._{A}.und fL._{I}.= bL._{I}. und fL._{A}. = bL._{A}..

Im Folgenden wird nun das erfindungsmäße Verfahren beschrieben. In den Schritten a.) und b.) werden die Deckel 32' vorzugsweise aus Metall ausgestanzt und der eierschachtelförmige Behälter 34 hergestellt. In jede Kammer 36 wird mindestens eine Kugel (Impulskörper) hineingelegt. Anschließend wird die klebrige Unterseite des Lotformteils 46' auf die Außenwände 42 und 44 des Behälters 34 geklebt. Der Deckel 32' wird auf die klebrige Oberseite des Lotformteils 46' geklebt. Dabei ist darauf zu achten, dass alle drei Teile (Lotformteil, Deckel, Behälter) bündig zueinander ausgerichtet sind. Anschließend wird das Lotformteil 46' zum Schmelzen gebracht.

### Bezugszeichenliste

- 10: Behälter
- 12: Kammer
- 14: Längstrennwand
- 16: Quertrennwand
- 18: Kragen
- 20: Deckel
- 22: Schweißnaht
- 24: Riß
- 25: Kerbe
- 26: Innenkante
- 30: Verstimmungsbauteil
- 32: Deckel
- 34: Behälter
- 36: Kammer
- 38: Längsverlaufende Trennwand
- 40: Querverlaufende Trennwand
- 42: Längsaußenwand
- 44: Queraußenwand
- 46: Lotformteil
- A: Ebene
- bb._{A}: Außenbreite des Behälters
- bb._{I}: Innenbreite des Behälters
- bL._{A}: Außenlänge des Behälters
- bL._{I}: Innenlänge des Behälters
- bs: Wandstärke der Außenwände
- db._{A}: Breite des Deckels
- dL._{A}: Länge des Deckels
- fb._{A}: Außenbreite des Lotformteils
- fb._{I}: Innenbreite des Lotformteils
- fL._{A}: Außenlänge von 46
- fL._{I}: Außenlänge von 46
- fs: Wändstärke von 46
- h: Höhe des Behälters
- h._{ges}: Gesamthöhe des Verstimmungsbauteils

## Patentansprüche

1. Verfahren zur Herstellung eines Impuls-Verstimmungsbauteils für eine Turbine mit den Schritten:
a.) Herstellung eines Behälters (34) mit mindestens einer Kammer (36),
b.) Herstellung eines Deckels (32, 32'),
c.) Einlegen mindestens eines Impulskörpers in die Kammer (36),
d.) Fügen des Deckels (32, 32') mit dem Behälter (36),
**dadurch gekennzeichnet, dass**
das Fügen in Schritt d.) per Löten erfolgt.

2. Verfahren nach Anspruch 1, wobei für das Löten als Wärmequelle ein Ofen, eine induktive Spule, ein Laserstrahl und/oder ein Elektronenstrahl verwendet wird.

3. Verfahren nach Anspruch 2, **dadurch gekennzeichnet, dass** die Wärmebehandlung im Vakuum und/oder in einer Schutzatmosphäre erfolgt.

4. Verfahren nach mindestens einem der vorherigen Ansprüche, **dadurch gekennzeichnet, dass** die Reihenfolge der Schritte a.) und b.) beliebig ist und der Schritt c.) nach Schritt a.) folgt und der Schritt d.) nach den Schritten b.) und c.) folgt.

5. Verfahren nach mindestens einem der vorherigen Ansprüche, **dadurch gekennzeichnet, dass** die Herstellung des Deckels (32, 32') in Schritt b.) durch Stanzen, durch Laserstrahlschweißen und/oder durch Funkenerodieren erfolgt.

6. Verfahren nach mindestens einem der vorherigen Ansprüche, **dadurch gekennzeichnet, dass** die Herstellung des Behälters (34) in Schritt a.) durch Funkenerodieren, elektrochemische Bearbeitung und/oder mechanisches Abtragen, insbesondere durch Fräsen und/oder Schleifen, erfolt.

7. Verfahren nach mindestens einem der vorherigen Ansprüche, **dadurch gekennzeichnet, dass** nach Schritt a.) und vor Schritt c.) die Innenwandung (42, 44) der Kammer (36) mit Al.₂.O.₃.bestrahlt wird.

8. Verfahren nach mindestens einem der vorherigen Ansprüche, **dadurch gekennzeichnet, dass** vor Schritt d.) mindestens ein umlaufender Teil des Behälters (34) von Oxid befreit wird, auf dem vor Schritt d.) das Lot aufgetragen wird.

9. Verfahren nach mindestens einem der vorherigen Ansprüche, **dadurch gekennzeichnet, dass** in Schritt d.) die Lötzeit von 1s bis 60s beträgt.

10. Verfahren nach mindestens einem der vorherigen Ansprüche, **dadurch gekennzeichnet, dass** vor Schritt d.) auf den Behälter (34) und/oder auf dem Deckel (32, 32') ein Lot-formteil (46) platziert wird.

11. Verfahren nach Anspruch 10, wobei vor Schritt d.) das Lotformteil (46) beidseitig auf den Deckel (32, 32') und auf den Behälter (34) geklebt wird.

12. Verfahren nach mindestens einem der Ansprüche 10 bis 11, wobei die Außenbreite (bb._{A}.) des Behälters (34) und die Außenbreite (fb._{A}.) des Lotformteils (46) die Bedingung bb._{A}. ≥fb._{A}. erfüllen und die Innenbreite (bb._{I}.) des Behälters (34) und die Innenbreite (fb._{I}.) des Lotformteils (46) die Bedingung bb._{I}.≤fb._{I}. erfüllen, wobei fb._{A}. > fb._{I}. gilt.

13. Verfahren nach mindestens einem der Ansprüche 10 bis 12, wobei die Außenlänge (bL._{A}.) des Behälters () und die Außenlänge (fL._{A}.) des Lotformteils (46) die Bedingung bL._{A}. ≥fL._{A}. erfüllen und die Innenlänge (bL._{I}.) des Behälters (34) und die Innenlänge (fL._{I}.) des Lotformteils (46) die Bedingung bL._{I}.≤ fL._{I}. erfüllen, wobei fL._{A}. > fL._{I}. gilt.
